# EUROPÄISCHE PATENTSCHRIFT

(11) **EP 1 977 948 B1**
(45) Veröffentlichungstag und Bekanntmachung des Hinweises auf die Patenterteilung: **17.11.2010**
(21) Anmeldenummer: 08102800.3
(22) Anmeldetag: 20.03.2008
(51) Int. Cl.: B61C 3/00

(54) **Zuverband für einen Schnellzug, mit elektrischem Antrieb**
Train set for an express train, with electrical power supply
Chaîne de wagons pour un train rapide, avec motorisation électrique

(30) Priorität: 30.03.2007 RU 2007111664 U
(43) Veröffentlichungstag der Anmeldung: 08.10.2008
(73) Patentinhaber: SIEMENS AKTIENGESELLSCHAFT, 80333 München (DE); Offene Aktiengesellschaft "Russische Eisenbahnen", 107144 Moskau (RU)
(72) Erfinder: Gapanovich, Valentin Aleksandrovich, 121609, Moskau (RU); Lipp, Andreas, 91056, Erlangen (DE); Nazarov, Oleg Nikolaevich, 115612, Moskau (RU); Yagovkin, Andrej Nikolaevich, 140121, Ramenskij Rajon, llinskij (RU); Andreev, Vladimir Evgenevich, 196066, St. Petersburg (RU); Nazarov, Aleksander Stanislavovich, 129277, Moskau (RU)
(74) Vertreter: Glawe, Delfs, Moll

(56) Entgegenhaltungen:
- EP-A- 1 024 070
- EP-A- 1 060 969
- EP-A- 1 186 497
- WO-A-02/051662
- CH-A- 82 717
- FR-A- 2 806 364
- US-A1- 2003 084 814
- LEGE B ET AL: "VIERSYSTEMLOKOMOTIVEN FUER DIE DEUTSCHE BAHN AG" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 124, Nr. 12, 1. Dezember 2000 (2000-12-01), Seite 644/645, XP000975682 ISSN: 0941-0589

## Beschreibung

Die Erfindung bezieht sich auf einen Zugverband für einen Schnellzug, gehört zum Eisenbahntransportwesen und ist für die Ausstattung eines Triebfahrzeuges bestimmt, das für eine Personenbeförderung auf Schnellstrecken mit einer Spurbreite von 1520 mm in DC- und AC-Stromnetzen verwendet werden kann.

Die Konfiguration eines elektrischen Schnellzuges ist bekannt und weist zwei identische Traktionseinheiten auf, von denen jede einen Kopfwagen mit Traktionsumrichtern und einem Führerraum, einen Drosselwagen mit einem DC-Stromabnehmer, einen angetriebenen Mittelwagen mit Traktionsumrichtern und einen Fahrgastwagen mit Batterien aufweist ("Eisenbahnen der Welt", Nr. 12, 1997, Seiten 3-17).

Bei der bekannten Lösung entstehen im Steuervorgang von Traktionsstromrichtern elektromagnetische Störungen, die die Funktion des automatischen Eisenbahnsystems behindern. Als Ergebnis sind unberechtigte Weichen- und Lichtsignalumstellungen usw. möglich, infolge dessen die Fahrsicherheit bedroht wird. Außerdem können bei Ausfall eines der Stromabnehmer im Zugverband bei Speisung aus dem Gleichstromnetz bei Weiterfahrt mit dem verbleibenden Stromabnehmer die vorgegebenen Geschwindigkeits- und andere Betriebsparameter nicht eingehalten werden.

Der Erfindung liegt als Aufgabe die Erhöhung der Fahrsicherheit und die Gewährleistung der Betriebskenndaten bei DC- und AC-Stromversorgung zugrunde.

Die erwähnte Aufgabe wird gelöst durch einen Zugverband, der zwei identische Traktionseinheiten aufweist, von denen jede jeweils einen Kopffahrgastwagen mit Traktionsumrichtern und einem Führerraum, einen Drosselwagen mit DC-Stromabnehmer, einen Mittelfahrgastwagen mit Traktionsumrichtern sowie einen Fahrgastwagen mit Batterien aufweist, wobei der Drosselwagen mit Netzfiltern ausgestattet ist und zwischen dem Drosselwagen und dem Mittelwagen mit Traktionsumrichtern zusätzlich ein Fahrgastwagen mit Transformator und AC-Stromabnehmer angeordnet ist.

Die Netzfilter sichern eine einwandfreie Funktion der Systeme der Eisenbahnautomatik.

Bevorzugt ist der Drosselwagen mit einem Reservestromabnehmer ausgestattet. Der zusätzliche Stromabnehmer sichert die vorgegebenen Betriebskenndaten des Fahrzeuges bei eventuellem Ausfall des Hauptstromabnehmers.

Zur Erhöhung einer maximal zu befördernden Personenanzahl kann vorgesehen sein, dass sich in jeder Traktionseinheit zwischen dem Drosselwagen und dem Mittelwagen mit Traktionsumrichtern zusätzlich ein Fahrgastwagen befindet.

Zur Versorgung von Traktionsmotoren ist es günstig, wenn jeder Kopfwagen und jeder Drosselwagen jeweils mit Traktionscontainern ausgestattet ist, welche mit einem DC-Hauptschalter verbunden sind, die in einem Untertourbereich des Drosselwagens angeordnet ist. Beispielsweise kann jeder Traktionscontainer jeweils vier Traktionsmotoren versorgen.

Günstiger Weise sind die Traktionscontainer jeweils in einem Unterflurbereich der Kopfwagen unmittelbar angeordnet. Die Traktionscontainer können außerdem mit einem Bremswiderstand verbunden sein, der auf einem Dach oder im Unterflurbereich des Schienenfahrzeugs angeordnet ist.

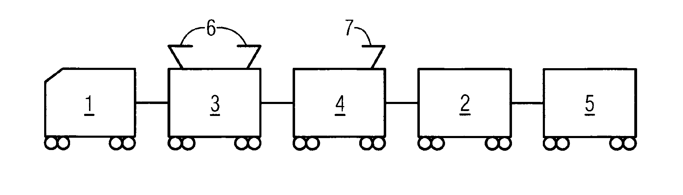

Ein Ausführungsbeispiel der Erfindung wird nachfolgend anhand der Zeichnung noch näher beschrieben. Die einzige Figur zeigt eine schematische Seitenansicht einer Traktionseinheit eines Schnellzuges.

Der Schnellzug besteht aus zwei identischen Traktionseinheiten, jede von denen je fünf Fahrgastwagen mit verschiedener Ausrüstung und Funktionen beinhaltet und einen Halbzug bildet.

Jede Traktionseinheit weist zwei Wagen mit Stromrichtern auf, die die Steuerung von Traktionsmotoren (nicht dargestellt) übernehmen. Der erste dieser Wagen (Wagen 1) ist ein Kopfwagen, und der zweite Wagen (Wagen 2) ist ein Mittelwagen. Im Kopfwagen 1 befindet sich der Führerraum.

Zwischen den Wagen 1 und 2 sind ein Drosselwagen 3 mit zwei DC-Stromabnehmern 6 und Netzfiltern (nicht dargestellt) untergebracht, sowie ein zusätzlicher Fahrgastwagen 4 mit Transformator (nicht dargestellt) und einem AC-Stromabnehmer 7. Darüber hinaus umfasst die Traktionseinheit des Zuges einen Fahrgastwagen 5 mit Batterie (nicht dargestellt).

Der Schnellzug wird aus zwei Traktionseinheiten durch Kupplung der Fahrgastwagen 5 mit Batterie gebildet.

Bei der Speisung des Triebzuges aus dem Gleichstromnetz wird die Energie durch auf einen dem Dach des Drosselwagens 3 untergebrachten DC-Stromabnehmer 6 und einen DC-Hauptschalter (nicht dargestellt), der sich im Unterflurbereich des Drosselwagens 3 befindet, auf die Traktionscontainer (nicht dargestellt) weitergeleitet, die im Unterflurbereich der Wagen 1 und 2 mit Stromrichtern liegen.

Einer der DC-Stromabnehmer 6 der Traktionseinheit ist während der Fahrt ein Reservestromabnehmer und wird beim Ausfall des zweiten Stromabnehmers 6 in Betrieb gesetzt.

Das Vorhandensein von Netzfiltern bei der Speisung aus dem Gleichstromnetz trägt dazu bei, die elektromagnetischen Störungen in Hochleistungsstromkreisen zu mindern und schließt einen unberechtigten Einfluss auf das System der Fehlermeldung, das Sperrsystem u. a. aus.

Bei der Speisung des Triebzuges aus dem Wechselstromnetz wird die Energie durch einen AC-Stromabnehmer 7 und einen AC-Hauptschalter, die auf dem Dach des Fahrgastwagens 4 untergebracht sind, auf die Primärwicklung eines Unterflurtransformators weitergeleitet. Auf der Sekundärwicklung des Transformators befinden sich vier Traktionswicklungen. Je zwei Traktionswicklungen versorgen je einen Traktionscontainer, die sich im Unterflurbereich der Wagen 1 und 2 mit Stromrichtern befinden.

Jeder von beiden Traktionscontainern versorgt je vier Traktionsmotoren (nicht dargestellt). Somit sind die Achsen der Fahrgastwagen 1 und 2 Triebachsen.

Jeder Traktionscontainer ist mit einem Bremswiderstand (nicht dargestellt) verbunden, der auf dem Dach oder im Unterflurbereich eingebaut ist.

## Patentansprüche

1. Zugverband für einen Schnellzug, der zwei identische Traktionseinheiten aufweist, von denen jede einen Kopfwagen (1) mit Traktionsumrichtern und einem Führerraum, einen Drosselwagen (3) mit einem DC-Stromabnehmer (6), einen angetriebenen Mittelwagen (2) mit Traktionsumrichtern und einen Fahrgastwagen (5) mit Batterien aufweist, **dadurch gekennzeichnet, dass** der Drosselwagen (3) mit Netzfiltern ausgestattet ist und sich in jeder Traktionseinheit zwischen dem Drosselwagen (3) und dem Mittelwagen (2) mit Traktionsumrichtern zusätzlich ein Fahrgastwagen (4) mit Transformator und AC-Stromabnehmer (7) befindet.

2. Zugverband nach Anspruch 1,
**dadurch gekennzeichnet, dass**
der Drosselwagen (3) mit einem Reservestromabnehmer ausgestattet ist.

3. Zugverband nach einem der Ansprüche 1 bis 3,
**dadurch gekennzeichnet, dass**
jeder Kopfwagen (1) und jeder Drosselwagen (3) jeweils mit Traktionscontainern ausgestattet sind, welche mit einem DC-Hauptschalter verbunden sind, der in einem Unterflurbereich des Drosselwagens (3) angeordnet ist.

4. Zugverband nach Anspruch 3,
**dadurch gekennzeichnet, dass**
jeder der Traktionscontainer jeweils vier Traktionsmotoren versorgt.

5. Zugverband nach einem der Ansprüche 3 oder 4,
**dadurch gekennzeichnet, dass**
die Traktionscontainer jeweils in einem Unterflurbereich der Kopfwagen (1) und Mittelwagen (2) angeordnet sind.

6. Zugverband nach einem der Ansprüche 3 bis 5,
**dadurch gekennzeichnet, dass**
jeder Traktionscontainer mit einem Bremswiderstand verbunden ist, der auf einem Dach oder im Unterflurbereich angeordnet ist.

## Claims

1. Train unit for an express train, which has two identical traction units each of which has a head carriage (1) with traction converters and a driver compartment, an inductor carriage (3) with a DC current collector (6), a driven centre carriage (2) with traction converters and a passenger carriage (5) with batteries,
**characterized in that**
the inductor carriage (3) is equipped with mains filters, and a passenger carriage (4) with a transformer and AC current collector (7) is additionally located between the inductor carriage (3) and the centre carriage (2) with traction converters, in each traction unit.

2. Train unit according to Claim 1,
**characterized in that**
the inductor carriage (3) is equipped with a spare current collector.

3. Train unit according to one of Claims 1 to 3,
**characterized in that**
each head carriage (1) and each inductor carriage (3) are in each case equipped with traction containers which are connected to a DC main switch, which is arranged in an underfloor area of the inductor carriage (3).

4. Train unit according to Claim 3,
**characterized in that**
each of the traction containers in each case supplies four traction motors.

5. Train unit according to one of Claims 3 or 4,
**characterized in that**
the traction containers are each arranged in an underfloor area of the head carriages (1) and centre carriages (2).

6. Train unit according to one of Claims 3 to 5,
**characterized in that**
each traction container is connected to a braking resistor, which is arranged on a roof or in the underfloor area.

## Revendications

1. Convoi de train pour un train rapide, qui a deux groupes de traction identiques dont chacun comporte un wagon ( 1 ) de tête, ayant des convertisseurs de traction et une cabine de conducteur, un wagon ( 3 ) à bobine ayant un appareil ( 4 ) de prise de courant continu, un wagon ( 2 ) médian entraîné ayant des convertisseurs de traction et une voiture ( 5 ) de passager ayant des batteries, **caractérisé en ce que** le wagon ( 3 ) à bobine est équipé de filtres de réseau, et il se trouve, dans chaque groupe de traction entre le wagon ( 3 ) à bobine et le wagon ( 2 ) médian ayant des convertisseurs de traction, supplémentairement une voiture ( 4 ) de passager ayant un transformateur et un dispositif ( 7 ) de prise de courant alternatif.

2. Convoi de train suivant la revendication 1,
**caractérisé en ce que**
le wagon ( 3 ) à bobine est équipé d'un dispositif de prise de courant de réserve.

3. Convoi de train suivant l'une des revendications 1 à 3,
**caractérisé en ce que**
chaque wagon ( 1 ) de tête et chaque wagon ( 3 ) à bobine sont équipés respectivement de conteneurs de traction, qui sont reliés à un commutateur principal en courant continu, qui est disposé dans la partie en-dessous du plancher du wagon ( 3 ) à bobine.

4. Convoi de train suivant la revendication 3,
**caractérisé en ce que**
chaque conteneur de traction alimente respectivement quatre moteurs de traction.

5. Convoi de train suivant l'une des revendications 3 ou 4,
**caractérisé en ce que**
les conteneurs de traction sont disposés respectivement dans une partie sous le plancher des wagons ( 1 ) de tête et des wagons ( 2 ) médians.

6. Convoi de train suivant l'une des revendications 3 à 5,
**caractérisé en ce que**
chaque conteneur de traction est relié à une résistance de freinage, qui est disposée sur un toit ou dans une partie sous le plancher.
